(19) Europäisches Patentamt
European Patent Office
Office européen des brevets

(11) **EP 2 713 338 B1**

(12) **EUROPEAN PATENT SPECIFICATION**

(45) Date of publication and mention
of the grant of the patent:
**08.11.2017 Bulletin 2017/45**

(51) Int Cl.:
**G06T 7/11** *(2017.01)*   **G06T 7/194** *(2017.01)*
**G06T 7/136** *(2017.01)*

(21) Application number: **13183598.5**

(22) Date of filing: **09.09.2013**

(54) **Segmenting an object based on disparity map**

Objektsegmentierung basierend auf Disparitätskarte

Segmentation d'un objet à partir d'une carte de disparité

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2012 CN 201210371931**

(43) Date of publication of application:
**02.04.2014 Bulletin 2014/14**

(73) Proprietor: **Ricoh Company, Ltd.**
**Tokyo 143-8555 (JP)**

(72) Inventor: **Lu, Yaojie**
**Haidian District**
**Beijin 100044 (CN)**

(74) Representative: **Maury, Richard Philip**
**Marks & Clerk LLP**
**90 Long Acre**
**London WC2E 9RA (GB)**

(56) References cited:
- CHUNG-HEE LEE: "Stereo vision-based vehicle detection using a road feature and disparity histogram", OPTICAL ENGINEERING, vol. 50, no. 2, 1 February 2011 (2011-02-01), page 027004, XP055049147, ISSN: 0091-3286, DOI: 10.1117/1.3535590
- SEBASTIEN KRAMM ET AL: "Obstacle detection using sparse stereovision and clustering techniques", INTELLIGENT VEHICLES SYMPOSIUM (IV), 2012 IEEE, IEEE, 3 June 2012 (2012-06-03), pages 760-765, XP032453074, DOI: 10.1109/IVS.2012.6232283 ISBN: 978-1-4673-2119-8
- JIA WANG ET AL: "Motion Detection in Driving Environment Using U-V-Disparity", 1 January 2005 (2005-01-01), COMPUTER VISION - ACCV 2006 LECTURE NOTES IN COMPUTER SCIENCE;;LNCS, SPRINGER, BERLIN, DE, PAGE(S) 307 - 316, XP019027359, ISBN: 978-3-540-31219-2 * page 312; figure 3 *
- IBRAHIM SEZAN M: "A PEAK DETECTION ALGORITHM AND LTS APPLICATION TO HISTOGRAM-BASED IMAGE DATA REDUCTION", COMPUTER VISION GRAPHICS AND IMAGE PROCESSING, ACADEMIC PRESS, DULUTH, MA, US, vol. 49, no. 1, 1 January 1990 (1990-01-01), pages 36-51, XP000132278,
- LABAYRADE R ET AL: "Real time obstacle detection in stereovision on non flat road geometry through V-disparity representation", INTELLIGENT VEHICLE SYMPOSIUM, 2002. IEEE JUN 17-21, 2002, PISCATAWAY, NJ, USA,IEEE, vol. 2, 17 June 2002 (2002-06-17), pages 646-651, XP010635896, ISBN: 978-0-7803-7346-4

**Description**

BACKGROUND OF THE INVENTION

1. Field of the Invention

The present invention relates to the field of image processing, and more particularly relates to a method and a device for dividing an object on the basis of a disparity map.

2. Description of the Related Art

In the field of image processing, object division is also called "object region division" sometimes. It is the first step of object recognition. A high accuracy object division is very helpful to object recognition and analysis.

In an image, an object is defined as a whole having a certain shape in general. For example, in an environment of a road, an object may be a pedestrian, a car, a traffic sign, etc., and in an environment of an office, the object may be a table, a chair, a computer, etc.

In the conventional techniques, the object division is carried out generally based on a grayscale image or a color image. However, the accuracy of this kind of object division based on complex visual features is limited. As a result, it is required to provide a method and a device for dividing an object able to accomplish a high accuracy division.

XP055049147, Lee et al, 2011: "Stereo vision-based vehicle detection using a road feature and disparity histogram", XP032453074, Kramm et al, June 2012: "Obstacle detection using sparse stereovision and clustering techniques", and XP019027359, Wang et al, 2005: "Motion Detection in Driving Environment Using U-V-Disparity" disclose segmenting an object based on an analysis of concave-convex attributes of a projection or histogram of a disparity map.

The invention is in the device of Claim 1 and the method of Claim 9.

As a result, by utilizing the above device and method, it is possible to carry out an object division on the basis of concave-convex attributes in a disparity map so as to improve the accuracy of the object division.

BRIEF DESCRIPTION OF THE DRAWINGS

FIG. 1 illustrates a block diagram of a device for dividing an object according to an embodiment of the present invention;

FIG. 2 illustrates an example of a disparity map in the embodiment of the present invention;

FIG. 3 illustrates a top view of the disparity map (a disparity projection view) shown in FIG.2;

FIG. 4 illustrates a block diagram of an object dividing member in the device for dividing the object according to the embodiment of the present invention;

FIGS. 5A and 5B illustrate a principle of detecting a concave point in the field of image processing;

FIG. 6 illustrates a process of determining a concave point by employing a concave-convex detecting algorithm in the embodiment of the present invention; and

FIG. 7 is a flowchart of a method of dividing an object according to an embodiment of the present invention.

DETAILED DESCRIPTION OF THE PREFERRED EMBODIMENTS

Hereinafter, embodiments of the present invention will be concretely described with reference to the drawings. However, it should be noted that the same symbols, which are in the specification and the drawings, stand for constructional elements having the basically-same function and structure, and repeated explanations for the constructional elements are omitted.

As described above, a technique on the basis of division of an object image may be widely used in various fields such as driver assistance, obstacle detection, vehicle detection, traffic warning, etc.

In U.S. Patent No. US7978881 B2 filed on Nov. 15, 2007 and whose applicant is Carestream Health, Inc., a method of dividing an image is disclosed. The method includes: receiving a group of 3D pixels; dividing the group of 3D pixels into a foreground group and a background group; classifying the 3D pixels in the foreground group into damaged 3D pixels and normally-splitted 3D pixels; shielding the normally-splitted 3D pixels, and carrying out a second division process with regard to the 3D pixels in the background group and the damaged 3D pixels, wherein, a stage-two foreground group including the damaged pixels and a part of 3D pixels in the background group is generated by the second division process; and classifying the 3D pixels in the stage-two foreground group into stage-two damaged 3D pixels and stage-two normally-splitted 3D pixels.

In the above method, by using the concave-convex shapes of the 3D pixels, the 3D pixels are classified into the normal and the abnormal, and by using the concave-convex shapes, it is determined whether the second division process needs to be carried out.

However, in the above method, the concave-convex shapes are only used as criteria for determination, and are not used as criteria for actual division, so that it is impossible to get a high accuracy object division.

According to one aspect of the present invention, a device for dividing an object (an object dividing device) is provided. The device includes a disparity map obtaining member configured to obtain a disparity map; a disparity projection view generating member configured to carry out projection with regard to the disparity map obtained by the disparity map obtaining member in a first direction so as to generate a disparity projection view; and an object dividing member configured to divide the object on the basis of concave-convex attributes in the disparity projection view generated by the disparity projection view generating member.

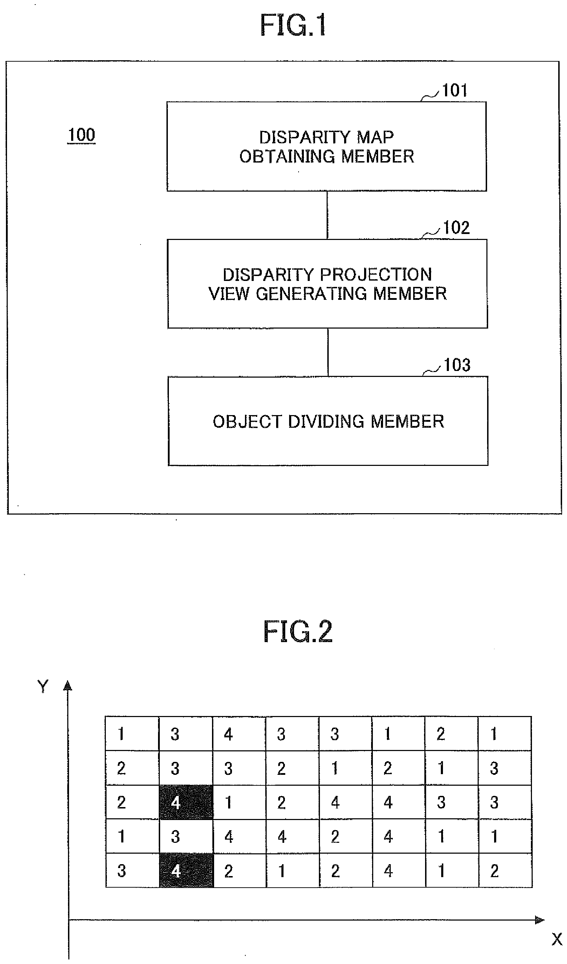

FIG. 1 illustrates a block diagram of a device for dividing an object according to an embodiment of the present invention.

As shown in FIG. 1, a device 100 for dividing an object according to the embodiment of the present invention includes a disparity map obtaining member 101 configured to obtain a disparity map; a disparity projection view generating member 102 configured to carry out projection with regard to the disparity map obtained by the disparity map obtaining member 101 so as to generate a disparity projection view; and an object dividing member 103 configured to divide the object on the basis of concave-convex attributes in the disparity projection view generated by the disparity projection view generating member 102.

By utilizing the device 100 for dividing the object according to the embodiment of the present invention, it is possible to divide the object on the basis of the concave-convex attributes in the disparity projection view. In addition, since the concave-convex attribute in the disparity projection view may reflect the outline shape of the object relatively accurately, it is possible to improve the accuracy of the object division.

Here it should be noted that it is possible to use a conventional camera able to capture a disparity map to serve as the disparity map obtaining member 101 so as to obtain the disparity map of the environment including the object. Here the disparity map refers to a map (an image) formed by disparity values of the respective positions on a plane as shown in FIG. 2.

FIG. 2 illustrates an example of a disparity map in the embodiment of the present invention.

As shown in FIG. 2, in the disparity map, the width in the X-axis direction is 8, the width in the Y-axis direction is 5, and the maximum disparity value is 4.

In the device 100 for dividing the object according to the embodiment of the present invention, it is possible to use a conventional object dividing method for carrying out initial division with regard to the object, so as to obtain a rough object region result and to determine a rough object position. By carrying out the above initial division, it is possible to obtain candidate objects, and then to utilize these candidate objects to limit a search area so as to speed up the object division. For example, in "Stereovision-Based Object Segmentation for Automotive Application" (EURASIP Journal on Applied Signal Processing 2005: 14, 2322-2329, 2005), an object dividing technique is disclosed.

By adopting the initial division, it is possible to control the division granularity of the object dividing device 100 according to the embodiment of the present invention. However, it is also possible to let the whole image be an object region, and then to carry out the object division by using the object dividing device 100 according to the embodiment of the present invention.

After the disparity map is obtained, the disparity projection view generating member 102 is used to generate a projection view of the disparity map (a disparity projection view) in a direction. For example, it is possible to generate a top view of the disparity map, a side view of the disparity map, etc. In what follows, an example of generating a top view of the disparity map is given. In this top view of the disparity map, the value of each point is the number of the corresponding points in the disparity map.

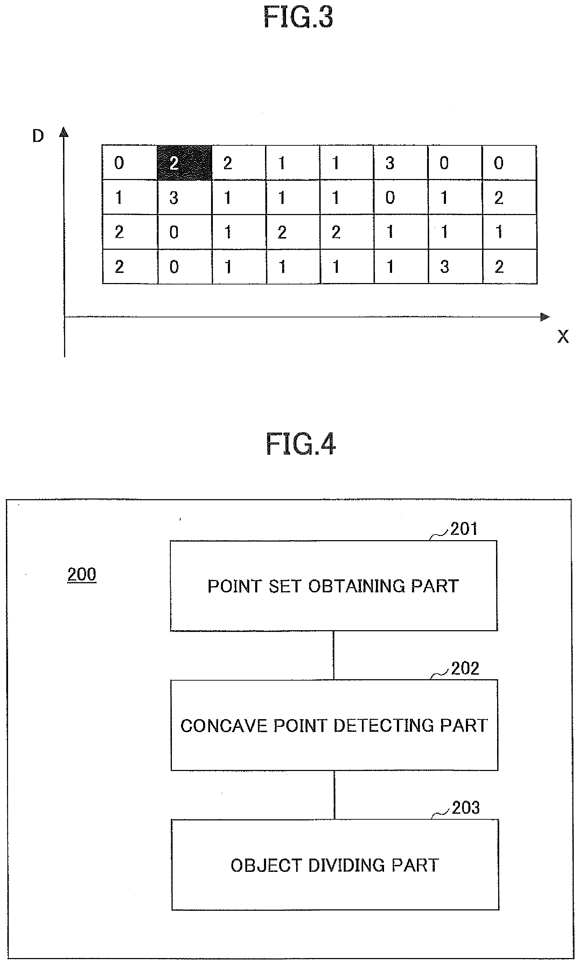

In particular, it is supposed that a disparity map obtained by the disparity map obtaining member 101 is DSP=Dsp(x,y), wherein, x and y refer to the horizontal and vertical positions in the disparity map, respectively; $x \in [0,W]$, and W refers to the width of the disparity map; $y \in [0,H]$, and H refers to the height of the disparity map; and Dsp(x,y) refers to the disparity value at a position (x,y). Additionally, it is supposed that the generated top view of the disparity map is Ui=Umap(x,d), wherein, $x \in [0,W]$, and W refers to the width of the disparity map; $d \in [0,MaxD]$, and MaxD refers to the maximum disparity value of the disparity map; and Umap(x0,d0) refers to the number of points whose horizontal positions are (x=xO) and whose disparity values are (d=d0). If the disparity map shown in FIG. 2 is taken as an example, then its top view is shown in FIG. 3.

FIG. 3 illustrates a top view of the disparity map shown in FIG.2.

As shown in FIG. 3, for example, in the second column of FIG. 2, i.e., at the position x=2, there are two points whose disparity values are 4. As a result, in FIG. 3, the value of the point at D=4 in the second column is 2.

Here it should be noted that those people skilled in the art may understand that on the basis of the above principle, it is possible to generate a projection view in any direction, for example, a side view of the disparity map, etc.

Here the repeated description is omitted.

In what follows, the specific operation of the object dividing member 103 is described by taking the obtained top view of the disparity map as an example.

FIG. 4 illustrates a block diagram of an object dividing member in the device for dividing the object according to the embodiment of the present invention.

As shown in FIG. 4, an object dividing member 200 in the device for dividing the object according to the embodiment of the present invention includes a point set obtaining part 201 configured to obtain a point set from the disparity projection view; a concave point detecting part 202 configured to detect at least one concave point in the point set obtained by the point set obtaining part 201 by applying a concave point detecting process (algorithm) to the point set; and an object dividing part 203 configured to divide the object on the basis of the at least one concave point detected by the concave point detecting part 202.

As describe above, in the object dividing member 200, it is possible to carry out the object division on the basis of the concave-convex attributes in the top view of the disparity map. In particular, at least one concave point is detected in the top view of the disparity map, and then image division is carried out based on the position x of the at least one concave point.

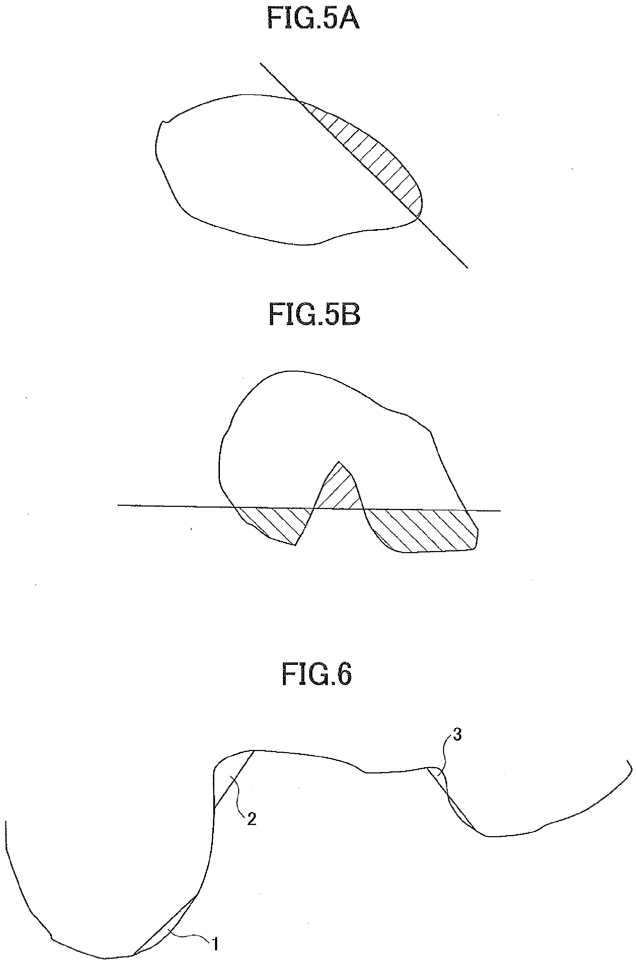

FIGS. 5A and 5B illustrate a principle of detecting a concave point in the field of image processing.

As shown in FIG. 5A, as for a given shape (a given object) in an image and a line passing through the shape, if the shape is convex, then a region surrounded by the edges of the object and the line is located on one side of the line forever. However, as shown in FIG. 5B, if the object is concave, then a region surrounded by the edges of the object and the line may be distributed on two sides of the line.

In general, as for a specific image, an object in an environment is not transparent. As a result, when a camera captures an image, in general, only information on one side facing the camera, of the object can be obtained; that is to say, as for the opposite side of the object, the camera cannot capture its disparity values. More particularly speaking, as for the part facing the camera, i.e., the side relatively near the camera, it is possible to obtain the outline of the object by retaining the nearest points.

That is to say, as for any one horizontal position, the point set obtaining part 201 obtains a point set $NPi=Npi(x)$ by retaining the nearest point, whose value is not zero, in each column of the top view of the disparity map. Here $Npi(x)$ refers to a point retained at the position x of the disparity map top view $Ui$ (the top view of the disparity map). For example, as for the top view of the disparity map as shown in FIG. 3, in the second column, the third point from bottom to top is retained, and in each of the other columns, the first point from bottom to top is retained; in this way, the above point set is obtained.

However, in an actual circumstance, the nearest point, whose value is not zero, in each column of the top view of a disparity map sometimes may not reflect the shape of an object very well. The reason is that in the top view of the disparity map, small values may represent noise and some small projections. In other words, in most circumstance, the height of the small projection of the object is not very big so that in the top view of the disparity map, the corresponding value is also not very big. In addition, as for the noise, since it does not have a stable disparity value, its corresponding value in the top view of the disparity map is also not very big. As a result, it is possible to remove these kinds of points, whose values are not very big, in the top view of the disparity map by setting a threshold value and carrying out binary processing.

For example, as for the above disparity map top view $Ui$, a threshold value T is set so as to get a new disparity map top view $TUi=Tr(Umap(x,d))$, wherein, Tr is defined as follows.

$$Tr(v) = \begin{cases} v & if(v \geq T) \\ 0 & if(v < T) \end{cases}$$

Here, the top view of the disparity map shown in FIG. 3 is taken as an example again for illustration. If it is supposed that a threshold value T is set as T=2, then the first point from bottom to top in the first column, the third point from bottom to top in the second column, the fourth point from bottom to top in the third column, the second point from bottom to top in the fourth column, the second point from bottom to top in the fifth column, the fourth point from bottom to top in the sixth column, the first point from bottom to top in the seventh column, and the first point from bottom to top in the eighth column make up a point set.

Furthermore, in the above threshold value setting method, it is also possible to adopt a dynamic threshold value for each column. That is to say, as for each column, an average value is calculated, and then this average value may be set as the threshold value used in the binary processing. In this way, the obtained (selected) point set may be better utilized for detecting the concave-convex shape of an object so as to improve the accuracy of the follow-on concave point detection.

Moreover, in the point set obtaining part 201, it is also possible to choose the first point having a maximum value (i.e., a disparity value) from bottom to top in each column to make up a point set.

After the point set NPi is obtained, it is possible to further erase the influence of the noise by carrying out a smoothing process. For example, it is possible to smooth NPi by employing an intermediate value or an average value so as to obtain NPSi=Npsi(x). In this way, by performing the above smoothing process, it is possible not only to remove points shifted too much but also to erase some discontinuous points in the point set; as a result, it is possible to improve the accuracy of the concave point detection.

Here it should be noted that those people skilled in the art may understand that the above binary processing and the smoothing process are optional. If the priority of reducing system load is higher than that of improving division accuracy, then it is possible to omit the optimization process (the binary processing or the smoothing process) with regard to the point set.

After the point set is obtained, the concave point detecting part 202 uses a concave point detecting algorithm so as to carry out the concave point detection. In the device 100 (FIG. 1) for dividing the object according to the embodiment of the present invention, for example, an algorithm of calculating CC (concave-convex measurement) values is employed for performing the concave point detection.

In the algorithm of calculating the CC values, a sliding window is utilized for scanning the point set NPi so that the CC value of each designated position x0 is calculated as follows.

$$CC(x_0) = \sum_{x=x_0-WIN}^{x=x_0+WIN} \phi\left(Npi(x) - \frac{x - x_0 + WIN}{2 \times WIN} \times (Npi(x_0 + WIN) - Npi(x_0 - WIN))\right)$$

Here $\phi(x) = \begin{cases} x & x > 0 \\ 0 & x \le 0 \end{cases}$; WIN refers to the size of the window which is related to the size of an target object; and the size of the window is as follows.

$$WIN = \frac{\alpha \times Size \times AVG(d)}{Base}$$

Here BASE refers to a camera parameter (by which conversion between the actual size of an object and the image size of the object is carried out); Size refers to a predetermined size of the target object; $\alpha$ refers to a predetermined parameter by which the size of the window is defined, for example, may be 0.5; and AVG(d) refers to the average disparity value of a disparity map.

By obtaining the CC values, some peak values of the CC values may be obtained. If a peak value is greater than a predetermined threshold value, then the point corresponding to this peak value may be regarded as a possible concave point CP.

In this way, a point set of concave points CP={x1,x2,...,xk} is obtained, wherein, k≧0.

In what follows, the reason why a concave point may be obtained by employing the above CC values is briefly described. As describe above, on the basis of an imaging principle, only data on the side facing a camera, of an object may be obtained. In other words, it is possible to determine a concave point by finding those points farther than the near points.

FIG. 6 illustrates a process of determining a concave point by using concave-convex measurement algorithm in the embodiment of the present invention.

As shown in FIG. 6, as for the case of 2, a maximum CC value is obtained, and as for the case of 1, a minimum CC value is obtained. In general, the greater a CC value is, the greater is the likelihood that the point corresponding to the CC value is a concave point.

In addition, in the device 100 (FIG. 1) of dividing the object according to the embodiment of the present invention, aside from the above algorithm for calculating the CC values, it is also possible to utilize another concave point detecting algorithm, for example, a concave point mining method disclosed in "Pedestrian Video Detection Algorithm Based on Convex Hull Clipping" (LI Jian, SUN Li-Jun; Computer Engineering; 36(2); Jan. of 2001).

After the concave points are detected, the object dividing part 203 performs horizontal division on the corresponding image on the basis of the detected concave points. The reason is that the obtained top view of the disparity corresponds to horizontal positions in the image. As a result, by utilizing the obtained concave point set CP, the image is divided into (k+1) parts. Here it should be noted that those people skilled in the art may understand that if it is necessary to carry out division in another direction, for example, division in the vertical direction, then it is possible to obtain a projection view of the disparity map in the other direction, for example, a side view of the disparity map, so as to carry out the division in the corresponding direction. Since the specific process is the same with that described above, its description is omitted here.

By utilizing the device 100 (FIG. 1) for dividing the object according to the embodiment of the present invention, it is possible to carry out, on the basis of the concave-convex attributes in the disparity projection view in a direction of a disparity map, the division of the object in this direction. Since the concave-convex attributes of the disparity projection view may relatively accurately reflect the outline shape of the object in this direction, the device 100 (FIG. 1) for dividing the object according to the embodiment of the present invention may significantly improve the accuracy of the object division.

According to another aspect of the present invention, a method of dividing an object (an object dividing method) is provided. The method includes a step of obtaining a disparity map; a step of carrying out projection in a first direction with regard to the obtained disparity map so as to generate a disparity projection view; and a step of dividing the object on the basis of cocave-convex attributes in the generated disparity projection view.

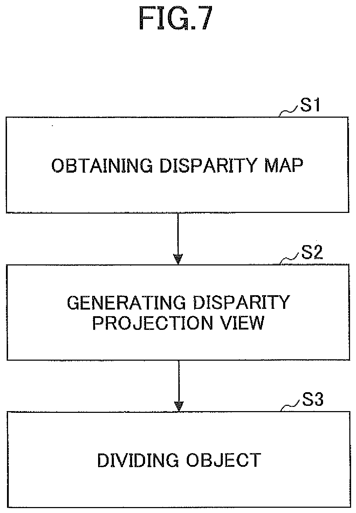

FIG. 7 is a flowchart of a method of dividing an object according to an embodiment of the present invention.

As shown in FIG. 7, a method of dividing an object according to the embodiment of the present invention includes a step S1 of obtaining a disparity map; a step S2 of carrying out projection in a first direction with regard to the obtained disparity map so as to generate a disparity projection view; and a step S3 of dividing the object on the basis of concave-convex attributes in the generated disparity projection view.

Moreover, the above object dividing method further includes a step of carrying out initial division with regard to the obtained disparity map so as to generate plural sub disparity maps including a region of the object. In particular, the step S2 is carried out by performing the projection in the first direction on at least one of the generated plural sub disparity maps so as to generate the disparity projection view.

Moreover, in the object dividing method, the step S3 further includes a step S31 of obtaining a point set from the disparity projection view; a step S32 of detecting at least one concave point in the obtained point set by carrying out a concave point detecting process with regard to the obtained point set; and a step S33 of dividing the object on the basis of the detected at least one concave point.

Moreover, in the object dividing method, the step S31 is carried out particularly by choosing the first point having the maximum disparity value, from bottom to top in each column of the disparity projection view to make up the point set.

Moreover, in the object dividing method, the step S31 is carried out particularly by choosing the first point having the disparity value greater than a predetermined threshold value, from bottom to top in each column of the disparity projection view to make up the point set.

Moreover, in the object dividing method, the step of choosing the first point having the disparity value greater than a predetermined threshold value, from bottom to top in each column of the disparity projection view to make up the point set particularly includes a step of setting the average disparity value of each column of the disparity projection view as the predetermined threshold value.

Moreover, in the object dividing method, the step S3 further includes a step of carrying out a smoothing process with regard to the obtained point set. In particular, the step S32 is carried out by applying the concave point detecting process to the smoothed point set so as to find the at least one concave point in the smoothed point set.

Moreover, in the object dividing method, the concave point detecting process (algorithm) is a process of calculating a concave-convex measurement value (a CC value), and the first direction is an X-axis direction. In particular, as for each designated position x0, its corresponding CC value is calculated as follows.

$$CC(x_0) = \sum_{x=x_0-WIN}^{x=x_0+WIN} \phi\left(Npi(x) - \frac{x-x_0+WIN}{2 \times WIN} \times (Npi(x_0+WIN) - Npi(x_0-WIN))\right)$$

Here, $\phi(x) = \begin{cases} x & x > 0 \\ 0 & x \leq 0 \end{cases}$ ; $Npi(x)$ refers to the obtained point set; and WIN refers to the size of a window which is related to the size of a target object.

Moreover, in the method of dividing the object, the size of the window is as follows.

$$WIN = \frac{\alpha \times Size \times AVG(d)}{Base}$$

Here, Base refers to a camera parameter by which conversion is carried out between the actual size of the object and the image size of the object; Size refers to a predetermined size of the target object; $\alpha$ refers to a predetermined parameter for defining the size of the window; and AVG(d) refers to the average disparity value of the disparity map.

As a result, by utilizing the above device and method, it is possible to carry out an object division on the basis of concave-convex attributes in a disparity map so as to improve the accuracy of the object division.

Here it should be noted that the above respective embodiments are just exemplary ones, and the specific structure and operation of each of them is not used for limiting the present invention.

Moreover, the embodiments of the present invention may be implemented in any convenient form, for example, using dedicated hardware, or a mixture of dedicated hardware and software. The embodiments of the present invention may be implemented as computer software implemented by one or more networked processing apparatuses. The network may comprise any conventional terrestrial or wireless communications network, such as the Internet. The processing apparatuses may comprise any suitably programmed apparatuses such as a general purpose computer, personal digital assistant, mobile telephone (such as a WAP or 3G-compliant phone) and so on. Since the embodiments of the present invention can be implemented as software, each and every aspect of the present invention thus encompasses computer software implementable on a programmable device.

The computer software may be provided to the programmable device using any storage medium for storing processor readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

**Claims**

1. Apparatus (100) for segmenting an object, configured to:

   obtain a two-dimensional disparity map (X, Y) of disparities of the object in first and second directions;
   carry out a projection on the disparity map along a first direction (Y) so as to generate a two-dimensional histogram of the distribution (D) of the disparity values along the first direction, the histogram showing the frequency of appearance of the disparity values along one axis (D) and the position along the second direction (X) along the other axis (X);

   and divide the object based on concave-convex attributes of an outline of the object as represented in the histogram (D, X), by determining the first point in the histogram, for each column along the second direction (X), along the first direction (D) of the histogram scanning from the low to the high disparity value end, whose value, representing the frequency of appearance of a disparity value, is non-zero, to obtain a set of points along the second direction; applying a concave point detecting algorithm to the set of points to determine concave-convex measurement values for the set of points and comparing those values to a predetermined threshold to obtain a set of concave points, wherein the concave points are determined by finding those points farther than the near points; and segmenting the object corresponding to the disparity map based on the set of concave points.

2. Apparatus according to claim 1, configured to determine, for each column of the histogram (D, X) along the second direction (X), the first point whose value is non-zero and is equal to the maximum disparity value of the disparity values in that column, to obtain a set of points along the second direction.

3. Apparatus according to claim 1, configured to determine, for each column of the histogram (D, X) along the second direction (X), the first point whose value is non-zero and is greater than a set threshold value, to obtain a set of points along the second direction.

4. Apparatus according to claim 3, configured to set the threshold value for the column to be the average disparity value in that column.

5. Apparatus according to any one of claims 1 to 4, configured to carry out a smoothing process with regard to the set of points obtained along the second direction.

6. Apparatus according to any one of claims 1 to 5, wherein the concave point detecting algorithm comprises calculating, for each designated position x0 along the second direction, a corresponding concave-convex measurement value as:

$$CC(x_0) = \sum_{x=x_0-WIN}^{x=x_0+WIN} \phi(Npi(x) - \frac{x-x_0+WIN}{2\times WIN} \times (Npi(x_0+WIN) - Npi(x_0-WIN)) ,$$

where $\phi(x) = \begin{cases} x & x > 0 \\ 0 & x \le 0 \end{cases}$ ; Npi(x) refers to the set of points; and WIN refers to the size of a window which is related to the size of the target object.

7. Apparatus according to claim 6, wherein the size of the window is calculated by

$$WIN = \frac{\alpha \times Size \times AVG(d)}{Base}$$

where Base refers to a camera parameter by which a conversion is carried out between an actual size of the object and an image size of the object; Size refers to a predetermined size of the target object; $\alpha$ refers to a predetermined parameter for defining the size of the window; and AVG(d) refers to an average disparity value of the disparity map.

8. Apparatus according to any one of claims 1 to 7, configured to process the disparity map in an orthogonal direction as well, carrying out the projection in the second direction (X) and obtaining the set of points along the first direction (Y), to obtain a different set of concave points.

9. A method of segmenting an object, comprising:

obtaining a two-dimensional disparity map (X, Y) of disparities of the object in first and second directions;
carrying out a projection on the disparity map along a first direction (Y) so as to generate a two-dimensional histogram of the distribution (D) of the disparity values along the first direction, the histogram showing the frequency of appearance of the disparity values along one axis (D) and the position along the second direction (X) along the other axis (X) ;
dividing the object based on concave-convex attributes of an outline of the object as represented in the histogram (D, X), by determining the first point in the histogram, for each column along the second direction (X), along the first direction (D) of the histogram scanning from the low to the high disparity value end, whose value, representing the frequency of appearance of a disparity value, is non-zero, to obtain a set of points along the second direction;
applying a concave point detecting algorithm to the set of points to determine concave-convex measurement values for the set of points and comparing those values to a predetermined threshold to obtain a set of concave points, wherein the concave points are determined by finding those points farther than the near points; and
segmenting the object corresponding to the disparity map based on the set on concave points.

**Patentansprüche**

1. Vorrichtung (100) zum Segmentieren eines Objekts, dafür konfiguriert:

eine zweidimensionale Ungleichheitskarte (X, Y) von Ungleichheiten des Objekts in einer ersten und einer zweiten Richtung zu erlangen;
eine Projektion auf die Ungleichheitskarte entlang einer ersten Richtung (Y) vorzunehmen, um dadurch ein zweidimensionales Histogramm der Verteilung (D) der Ungleichheitswerte entlang der ersten Richtung zu erzeugen, wobei das Histogramm die Häufigkeit des Vorkommens der Ungleichheitswerte entlang einer Achse (D) und die Position entlang der zweiten Richtung (X) entlang der anderen Achse (X) zeigt;

und das Objekt auf der Grundlage von Konkav-Konvex-Attributen eines Umrisses des Objekts, wie im Histogramm (D, X) dargestellt, zu teilen, und zwar durch: für jede Spalte entlang der zweiten Richtung (X), wobei entlang der ersten Richtung (D) des Histogramms vom niedrigen zum hohen Ungleichheitswert-Ende abgetastet wird, erfolgendes Bestimmen des ersten Punkts im Histogramm, dessen Wert, der die Häufigkeit des Vorkommens eines Ungleichheitswerts darstellt, von null verschieden ist, um eine Menge von Punkten entlang der zweiten Richtung zu erlangen; Anwenden eines Konkavpunktermittlungsalgorithmus auf die Menge von Punkten, um Konkav-Konvex-Messwerte für die Menge von Punkten zu bestimmen, und Vergleichen dieser Werte mit einem vorbestimmten Schwellenwert, um eine Menge von Konkavpunkten zu erlangen, worin die Konkavpunkte durch Finden deijenigen Punkte, die weiter entfernt als die nahen Punkte sind, bestimmt werden; und

Segmentieren des Objekts entsprechend der Ungleichheitskarte auf der Grundlage der Menge von Konkavpunkten.

2. Vorrichtung nach Anspruch 1, dafür konfiguriert, für jede Spalte des Histogramms (D, X) entlang der zweiten Richtung (X) den ersten Punkt zu bestimmen, dessen Wert von null verschieden und gleich dem maximalen Ungleichheitswert der Ungleichheitswerte in dieser Spalte ist, um eine Menge von Punkten entlang der zweiten Richtung zu erlangen.

3. Vorrichtung nach Anspruch 1, dafür konfiguriert, für jede Spalte des Histogramms (D, X) entlang der zweiten Richtung (X) den ersten Punkt zu bestimmen, dessen Wert von null verschieden und größer als ein eingestellter Schwellenwert ist, um eine Menge von Punkten entlang der zweiten Richtung zu erlangen.

4. Vorrichtung nach Anspruch 3, dafür konfiguriert, den Schwellenwert für die Spalte so einzustellen, dass er der durchschnittliche Ungleichheitswert in dieser Spalte ist.

5. Vorrichtung nach einem der Ansprüche 1 bis 4, dafür konfiguriert, einen Glättungsprozess im Hinblick auf die entlang der zweiten Richtung erlangte Menge von Punkten vorzunehmen.

6. Vorrichtung nach einem der Ansprüche 1 bis 5, worin der Konkavpunktermittlungsalgorithmus umfasst: für jede bezeichnete Position x0 entlang der zweiten Richtung erfolgendes Berechnen eines entsprechenden Konkav-Konvex-Messwerts als:

$$CC(x_0) = \sum_{x=x_0-WIN}^{x=x_0+WIN} \phi\left(Npi(x) - \frac{x - x_0 + WIN}{2 \times WIN} \times (Npi(x_0 + WIN) - Npi(x_0 - WIN))\right),$$

worin $\phi(x) = \begin{cases} x & x > 0 \\ 0 & x \leq 0 \end{cases}$; Npi(x) die Menge von Punkten bezeichnet; und WIN die Größe eines Fensters bezeichnet, die mit der Größe des Zielobjekts in Beziehung steht.

7. Vorrichtung nach Anspruch 6, worin die Größe des Fensters berechnet wird durch:

$$WIN = \frac{\alpha \times Size \times AVG(d)}{Base}$$

worin Base einen Kameraparameter bezeichnet, durch den eine Konvertierung zwischen einer tatsächlichen Größe des Objekts und einer Bildgröße des Objekts vorgenommen wird; Size eine vorbestimmte Größe des Zielobjekts bezeichnet; α einen vorbestimmten Parameter zum Definieren der Größe des Fensters bezeichnet; und AVG(d) einen durchschnittlichen Ungleichheitswert für die Ungleichheitskarte bezeichnet.

8. Vorrichtung nach einem der Ansprüche 1 bis 7, dafür konfiguriert, die Ungleichheitskarte ebenso in einer orthogonalen Richtung zu verarbeiten, wobei die Projektion in der zweiten Richtung (X) vorgenommen und die Menge von Punkten entlang der ersten Richtung (Y) erlangt wird, um eine andere Menge von Konkavpunkten zu erlangen.

9. Verfahren zum Segmentieren eines Objekts, umfassend:

Erlangen einer zweidimensionalen Ungleichheitskarte (X, Y) von Ungleichheiten des Objekts in einer ersten und einer zweiten Richtung;

Vornehmen einer Projektion auf die Ungleichheitskarte entlang einer ersten Richtung (Y), um dadurch ein zweidimensionales Histogramm der Verteilung (D) der Ungleichheitswerte entlang der ersten Richtung zu erzeugen, wobei das Histogramm die Häufigkeit des Vorkommens der Ungleichheitswerte entlang einer Achse (D) und die Position entlang der zweiten Richtung (X) entlang der anderen Achse (X) zeigt;

Teilen des Objekts auf der Grundlage von Konkav-Konvex-Attributen eines Umrisses des Objekts, wie im Histogramm (D, X) dargestellt, und zwar durch: für jede Spalte entlang der zweiten Richtung (X), wobei entlang der ersten Richtung (D) des Histogramms vom niedrigen zum hohen Ungleichheitswert-Ende abgetastet wird, erfolgendes Bestimmen des ersten Punkts im Histogramm, dessen Wert, der die Häufigkeit des Vorkommens eines Ungleichheitswerts darstellt, von null verschieden ist, um eine Menge von Punkten entlang der zweiten Richtung zu erlangen; Anwenden eines Konkavpunktermittlungsalgorithmus auf die Menge von Punkten, um Konkav-Konvex-Messwerte für die Menge von Punkten zu bestimmen, und Vergleichen dieser Werte mit einem vorbestimmten Schwellenwert, um eine Menge von Konkavpunkten zu erlangen, worin die Konkavpunkte durch Finden derjenigen Punkte, die weiter entfernt als die nahen Punkte sind, bestimmt werden; und

Segmentieren des Objekts entsprechend der Ungleichheitskarte auf der Grundlage der Menge von Konkavpunkten.

## Revendications

1. Appareil (100) pour segmenter un objet, configuré de manière à :

   obtenir une carte de disparités bidimensionnelle (X, Y) de disparités de l'objet dans des première et seconde directions ;

   mettre en oeuvre une projection sur la carte de disparités suivant une première direction (Y) de manière à générer un histogramme bidimensionnel de la distribution (D) des valeurs de disparité suivant la première direction, l'histogramme présentant la fréquence d'apparition des valeurs de disparité suivant un axe (D) et la position suivant la seconde direction (X) suivant l'autre axe (X) ;

   et diviser l'objet sur la base d'attributs concave-convexe d'un contour de l'objet comme représenté selon l'histogramme (D, X), en déterminant le premier point dans l'histogramme, pour chaque colonne suivant la seconde direction (X), suivant la première direction (D) de l'histogramme en effectuant un balayage depuis l'extrémité de valeur de disparité faible jusqu'à l'extrémité de valeur de disparité élevée, dont la valeur, qui représente la fréquence d'apparition d'une valeur de disparité, est non à zéro, de manière à obtenir un jeu de points suivant la seconde direction ; en appliquant un algorithme de détection de point concave au jeu de points de manière à déterminer des valeurs de mesure concave-convexe pour le jeu de points et en comparant ces valeurs à un seuil prédéterminé de manière à obtenir un jeu de points concaves, dans lequel les points concaves sont déterminés en trouvant les points situés plus loin que les points proches ; et

   en segmentant l'objet qui correspond à la carte de disparités sur la base du jeu de points concaves.

2. Appareil selon la revendication 1, configuré de manière à déterminer, pour chaque colonne de l'histogramme (D, X) suivant la seconde direction (X), le premier point dont la valeur est non à zéro et est égale à la valeur de disparité maximum des valeurs de disparité dans cette colonne, de manière à obtenir un jeu de points suivant la seconde direction.

3. Appareil selon la revendication 1, configuré de manière à déterminer, pour chaque colonne de l'histogramme (D, X) suivant la seconde direction (X), le premier point dont la valeur est non à zéro et est supérieure à une valeur de seuil définie, de manière à obtenir un jeu de points suivant la seconde direction.

4. Appareil selon la revendication 3, configuré de manière à définir la valeur de seuil pour la colonne de telle sorte qu'elle soit la valeur de disparité moyenne dans cette colonne.

5. Appareil selon l'une quelconque des revendications 1 à 4, configuré de manière à mettre en oeuvre un processus de lissage en relation avec le jeu de points obtenu suivant la seconde direction.

6. Appareil selon l'une quelconque des revendications 1 à 5, dans lequel l'algorithme de détection de point concave comprend le calcul, pour chaque position désignée x0 suivant la seconde direction, d'une valeur de mesure concave-convexe correspondante comme :

$$CC(x_0) = \sum_{x=x_0-WIN}^{x=x_0+WIN} \phi(Npi(x)) - \frac{x-x_0+WIN}{2 \times WIN} \times (Npi(x_0+WIN) - Npi(x_0-WIN)),$$

où $\phi(x) = \begin{cases} x & x > 0 \\ 0 & x \leq 0 \end{cases}$ ; Npi(x) désigne le jeu de points ; et WIN désigne la taille d'une fenêtre qui est rapportée à la taille de l'objet cible.

**7.** Appareil selon la revendication 6, dans lequel la taille de la fenêtre est calculée comme suit :

$$WIN = \frac{\alpha \times Size \times AVG(d)}{Base}$$

où Base désigne un paramètre de caméra/d'appareil photographique au moyen duquel une conversion est mise en oeuvre entre une taille réelle de l'objet et une taille d'image de l'objet ; Size désigne une taille prédéterminée de l'objet cible ; $\alpha$ désigne un paramètre prédéterminé pour définir la taille de la fenêtre ; et AVG(d) désigne une valeur de disparité moyenne de la carte de disparités.

**8.** Appareil selon l'une quelconque des revendications 1 à 7, configuré de manière à traiter la carte de disparités dans une direction orthogonale également, en mettant en oeuvre la projection dans la seconde direction (X) et en obtenant le jeu de points suivant la première direction (Y), de manière à obtenir un jeu de points concaves différent.

**9.** Procédé de segmentation d'un objet, comprenant :

l'obtention d'une carte de disparités bidimensionnelle (X, Y) de disparités de l'objet dans des première et seconde directions ;
la mise en oeuvre d'une projection sur la carte de disparités suivant une première direction (Y) de manière à générer un histogramme bidimensionnel de la distribution (D) des valeurs de disparité suivant la première direction, l'histogramme présentant la fréquence d'apparition des valeurs de disparité suivant un axe (D) et la position suivant la seconde direction (X) suivant l'autre axe (X) ;
la division de l'objet sur la base d'attributs concave-convexe d'un contour de l'objet comme représenté selon l'histogramme (D, X), en déterminant le premier point dans l'histogramme, pour chaque colonne suivant la seconde direction (X), suivant la première direction (D) de l'histogramme en effectuant un balayage depuis l'extrémité de valeur de disparité faible jusqu'à l'extrémité de valeur de disparité élevée, dont la valeur, qui représente la fréquence d'apparition d'une valeur de disparité, est non à zéro, de manière à obtenir un jeu de points suivant la seconde direction ; en appliquant un algorithme de détection de point concave au jeu de points de manière à déterminer des valeurs de mesure concave-convexe pour le jeu de points et en comparant ces valeurs à un seuil prédéterminé de manière à obtenir un jeu de points concaves, dans lequel les points concaves sont déterminés en trouvant les points situés plus loin que les points proches ;
et
en segmentant l'objet qui correspond à la carte de disparités sur la base du jeu de points concaves.

# FIG.1

100

```
                    ┌─────────────────────────┐ ~101
                    │   DISPARITY MAP          │
                    │   OBTAINING MEMBER       │
                    └─────────────────────────┘
                              │
                    ┌─────────────────────────┐ ~102
                    │  DISPARITY PROJECTION    │
                    │  VIEW GENERATING MEMBER  │
                    └─────────────────────────┘
                              │
                    ┌─────────────────────────┐ ~103
                    │                          │
                    │  OBJECT DIVIDING MEMBER  │
                    │                          │
                    └─────────────────────────┘
```

# FIG.2

| | | | | | | | |
|---|---|---|---|---|---|---|---|
| 1 | 3 | 4 | 3 | 3 | 1 | 2 | 1 |
| 2 | 3 | 3 | 2 | 1 | 2 | 1 | 3 |
| 2 | **4** | 1 | 2 | 4 | 4 | 3 | 3 |
| 1 | 3 | 4 | 4 | 2 | 4 | 1 | 1 |
| 3 | **4** | 2 | 1 | 2 | 4 | 1 | 2 |

Y

X

# FIG.3

D

| 0 | 2 | 2 | 1 | 1 | 3 | 0 | 0 |
|---|---|---|---|---|---|---|---|
| 1 | 3 | 1 | 1 | 1 | 0 | 1 | 2 |
| 2 | 0 | 1 | 2 | 2 | 1 | 1 | 1 |
| 2 | 0 | 1 | 1 | 1 | 1 | 3 | 2 |

X

# FIG.4

200

201

**POINT SET OBTAINING PART**

202

**CONCAVE POINT DETECTING PART**

203

**OBJECT DIVIDING PART**

# FIG.5A

# FIG.5B

# FIG.6

# FIG.7

```
                                    ⟋S1
┌─────────────────────────────────────┐
│                                      │
│      OBTAINING DISPARITY MAP         │
│                                      │
└─────────────────────────────────────┘
                   │
                   ▼
                                    ⟋S2
┌─────────────────────────────────────┐
│                                      │
│       GENERATING DISPARITY           │
│        PROJECTION VIEW               │
│                                      │
└─────────────────────────────────────┘
                   │
                   ▼
                                    ⟋S3
┌─────────────────────────────────────┐
│                                      │
│         DIVIDING OBJECT              │
│                                      │
└─────────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7978881 B2

**Non-patent literature cited in the description**

- **LEE et al.** *Stereo vision-based vehicle detection using a road feature and disparity histogram,* 2011
- **KRAMM et al.** *Obstacle detection using sparse stereovision and clustering techniques,* June 2012
- **WANG et al.** *Motion Detection in Driving Environment Using U-V-Disparity,* 2005
- Stereovision-Based Object Segmentation for Automotive Application. *EURASIP Journal on Applied Signal Processing,* 2005, vol. 14, 2322-2329
- **LI JIAN ; SUN LI-JUN.** Pedestrian Video Detection Algorithm Based on Convex Hull Clipping. *Computer Engineering,* January 2001, vol. 36 (2